# FASCICULE DE BREVET EUROPEEN

(11) **EP 1 637 374 B1**
(45) Date de publication et mention de la délivrance du brevet: **30.04.2008**
(21) Numéro de dépôt: 05291903.2
(22) Date de dépôt: 14.09.2005
(51) Int. Cl.: B60J 5/04, B60J 10/06

(54) **Dispositif et procédé d'assistance à la fixation d'un élément de vitrage à une porte sans cadre d'un véhicule automobile**
Vorrichtung und Verfahren zur Unterstützung der Befestigung eines Glaselementes an einer rahmenlosen Tür eines Kraftfahrzeuges.
Device and procedure for assisting the fastening of a window element on a frameless door of a motor vehicle

(30) Priorité: 15.09.2004 FR 0409786
(43) Date de publication de la demande: 22.03.2006
(73) Titulaire: PEUGEOT CITROËN AUTOMOBILES S.A., 78140 Vélizy Villacoublay (FR)
(72) Inventeur: Laverne, Jérôme, 78000 Versailles (FR); Parillaud, Patrick, 75017 Paris (FR)
(74) Mandataire: Blot, Philippe Robert Emile

(56) Documents cités:
- EP-A- 0 742 117
- FR-A- 2 844 246
- US-A- 4 736 515
- US-A- 5 960 588
- US-A- 6 061 890
- US-A1- 2002 052 710
- US-B1- 6 247 218

## Description

L'invention concerne un dispositif d'assistance à la fixation d'un élément de vitrage sur une porte sans cadre d'un véhicule automobile.

En particulier, l'invention concerne un dispositif d'assistance à la fixation d'au moins un élément de vitrage sur une porte sans cadre d'un véhicule automobile comportant un gabarit destiné à être monté sur la porte dans une position prédéterminée, et comportant des moyens de fixation de la position optimale de ou de chaque élément de vitrage.

L'invention concerne également un procédé d'assistance correspondant.

Sur une porte sans cadre de véhicule automobile, il est nécessaire que chaque vitre soit précisément positionnée par rapport aux étanchéités (sur caisse et sur porte) et fixée pour éviter tout problème d'étanchéité dans l'habitacle du véhicule. Ainsi, le contour de la vitre doit s'ajuster exactement au dormant ou au gousset de la porte ainsi qu'aux joints accueillant les bords supérieur et arrière de la vitre. Un interstice entre ces parties occasionne des problèmes d'infiltration d'air ou d'eau désagréable pour les occupants du véhicule.

Généralement, chaque vitre est fixée sur chaque porte, une par une, manuellement par un opérateur de montage. Pour cela, l'opérateur peut installer un gabarit sur la porte ou se référer directement à la caisse. Un tel gabarit est formé par des montants portés par un cadre. Les montants s'étendent selon deux directions, sur une longueur correspondant à la hauteur de la vitre, lorsque celle-ci est dans une position correcte. Ces montants définissent ainsi la position haute, longitudinale et transversale de la vitre à l'aide de butées prévues sur le gabarit. L'opérateur utilise le gabarit comme repère visuel pour positionner correctement la vitre avant fixation de celle-ci au lève-vitre. A cet effet, il pousse la vitre contre les butées du gabarit avant d'opérer au serrage de celle-ci au lève-vitre.

Cependant, cet appui physique modifie les conditions limites de la vitre à fixer et la met sous contrainte. Lorsque la vitre n'est plus sous contrainte, elle retourne dans sa position de repos qui ne correspond plus à la position délimitée par les montants du gabarit.

Le document US-6, 061890 décrit un dispositif d'assistance à la fixation d'un élément de vitrage sur une porte sans cadre d'un véhicule automobile comportant un gabarit destiné à être monté sur la porte et un lecteur pour lire la position de l'élément de vitrage et générer une information représentative de cette position.

Ces modes de fixation ne garantissent pas une étanchéité et une qualité géométrique suffisante dans l'habitacle du véhicule.

L'invention a pour but de proposer un dispositif permettant de fixer correctement les vitres sur les portes d'un véhicule et d'éviter ainsi les problèmes d'étanchéité dans l'habitacle de ce véhicule.

A cet effet, l'invention a pour objet un dispositif d'assistance à la fixation d'au moins un élément de vitrage du type précité, lesdits moyens de fixation de la position optimale comprenant :
- au moins un lecteur fixé sur le gabarit pour lire la position réelle de l'élément de vitrage et à générer au moins une information représentative de cette position réelle par rapport au gabarit ;
- une mémoire de stockage d'au moins une information représentatives de la position optimale de l'élément de vitrage par rapport au gabarit ;
- des moyens de comparaison de la ou de chaque information représentative de la position réelle à la ou à chaque information représentative de la position optimale ; et
- des moyens de mise à disposition du résultat de cette comparaison ;
caractérisé en ce que les moyens de fixation de la position optimale comprennent au moins une plaque de repère fixée au gabarit sensiblement au droit de ou de chaque lecteur et formant un repère pour la lecture de la position d'une surface de référence de l'élément de vitrage, le ou chaque lecteur étant un lecteur optique propre à lire la position de cette surface de repère, et en ce que la ou chaque information représentative de la position optimale de l'élément de vitrage comprend au moins une information représentative de cette surface de repère.

Suivant des modes particuliers de réalisation, le dispositif comporte une ou plusieurs des caractéristiques suivantes :
- le ou chaque lecteur optique comprend au moins un émetteur apte à générer un faisceau laser et au moins un récepteur apte à réceptionner au moins une partie dudit faisceau laser émis, après réflexion de celui-ci contre une surface de l'élément de vitrage ;
- la surface de repère comporte un bord périphérique, une tranche ou un coin de l'élément de vitrage ;
- la ou chaque information représentative de la position optimale comprend au moins deux informations chacune représentative d'une position limite acceptable de l'élément de vitrage, et les moyens de comparaison sont propres à comparer la ou chaque information représentative de la position réelle à chaque information représentative d'une position limite acceptable de l'élément de vitrage ;
- il comprend un calculateur propre à définir au moins une demande de déplacement de l'élément de vitrage selon l'un au l'autre des axes en fonction du résultat de la comparaison, et en ce que les moyens d'affichage sont propres à afficher la ou chaque demande de déplacement ;
- la mémoire est propre à stocker plusieurs informations de position optimale de l'élément de vitrage correspondant chacune à différents pourtours d'entrée de porte, et en ce que ledit calculateur est apte à recevoir au moins une information relative au pourtour du cadre de la porte et à sélectionner dans la mémoire une information représentative de la position optimale de l'élément de vitrage en fonction de la ou de chaque information relative au pourtour du cadre de la porte, et
- ledit calculateur est apte à transmettre un signal à un dispositif d'entraînement de la chaîne de montage de portes, lorsque le ou chaque élément de vitrage est correctement positionné.

L'invention a également pour objet un procédé d'assistance à la fixation d'un élément de vitrage sur une porte sans cadre d'un véhicule automobile, comportant les étapes suivantes :
- montage d'un gabarit sur la porte, par un opérateur, ledit gabarit délimitant matériellement la position optimale de ou de chaque élément de vitrage ;
- ajustement manuel, assisté ou automatisé de la position de l'élément de vitrage sur la porte;
- fixation de la position de ou de chaque élément de vitrage à la porte ; ladite étape de fixation comprenant les étapes suivantes :

- lecture de la position réelle par rapport au gabarit de ou de chaque élément de vitrage par au moins un lecteur fixé sur ledit gabarit et délivrance d'au moins une information représentative de la position réelle par rapport au gabarit de ou de chaque élément de vitrage, à des moyens de comparaison ;
- comparaison de la ou de chaque information représentative de la position réelle par rapport au gabarit à au moins une information préenregistrée représentative d'une position optimale par rapport au gabarit de ou de chaque élément de vitrage, par les moyens de comparaison ;
- interprétation du résultat de cette comparaison, par un calculateur ; et
- mise à disposition de l'interprétation du résultat de cette comparaison sur un dispositif d'affichage ;
caractérisé en ce que l'étape de lecture comprend en outre une étape de lecture de la position d'une surface de référence de l'élément de vitrage par le ou chaque lecteur, au moins une plaque de repère étant fixée au gabarit sensiblement au droit de ou de chaque lecteur et formant un repère pour ladite lecture, et en ce que la ou chaque information représentative de la position optimale de l'élément de vitrage comprend au moins une information représentative de cette surface de repère.

L'invention sera mieux comprise à la lecture de la description qui va suivre, donnée uniquement à titre d'exemple et faite en se référant aux dessins annexés, sur lesquels :
- la Fig.1 est une vue d'une face intérieure d'une porte d'un véhicule automobile sur laquelle un dispositif selon l'invention a été monté ;
- la Fig.2 est une vue de côté de la porte représentée sur la Fig.1 ;
- la Fig.3 est une vue agrandie d'une partie de la Fig.2 ;
- la Fig.4 est une vue schématique d'un bloc fonctionnel représentant le dispositif selon l'invention ; et

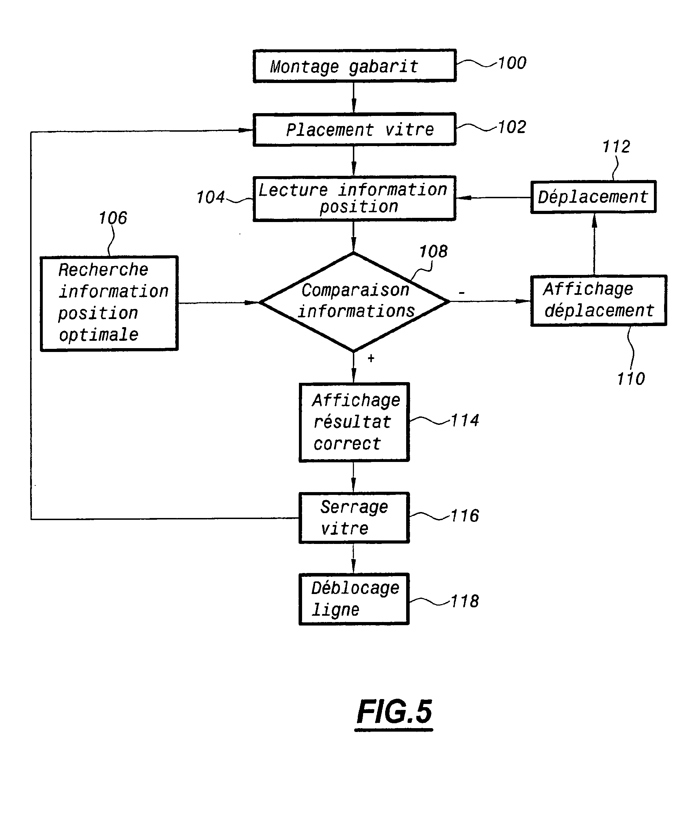

- la Fig.5 est un diagramme représentant le procédé d'assistance selon l'invention.

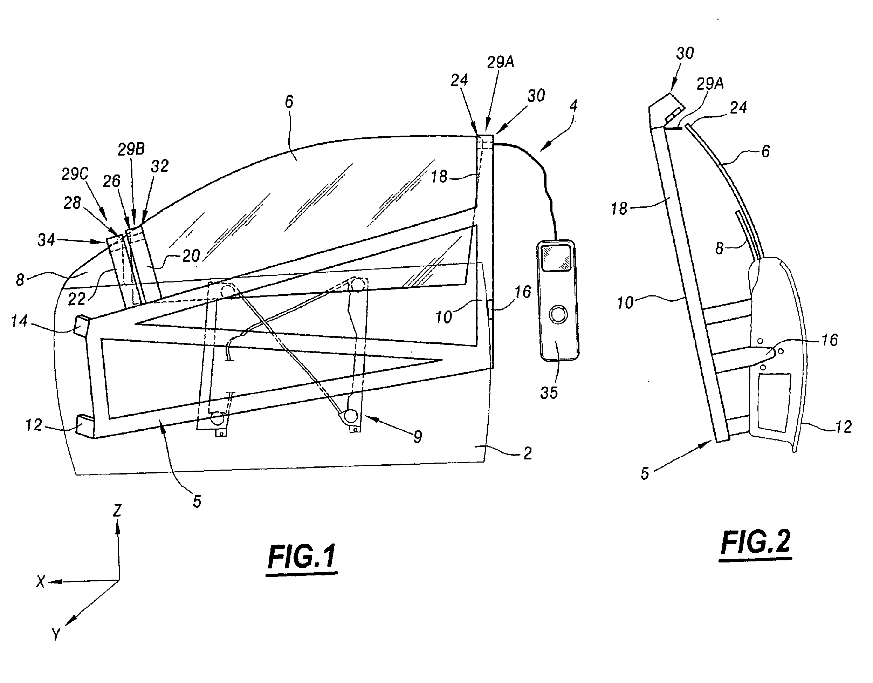

La Fig.1 représente schématiquement une porte 2 avant droite d'un véhicule automobile sur laquelle un dispositif d'assistance 4 a été fixé. Ce dispositif comporte un gabarit rigide 5 équipé de capteurs de position.

La porte 2 est disposée dans un plan X, Z d'un référentiel X, Y, Z défini pour les besoins de la description. L'axe Z est un axe vertical qui s'étend selon la hauteur de la porte 2. L'axe X est un axe horizontal, longitudinal à la porte 2 et l'axe Y est transversal à la porte 2.

La porte 2 supporte une vitre 6 et un gousset 8 destinés à être fixés respectivement à des chariots d'un lève-vitre 9 et à la porte 2. La vitre 6 et le gousset 8 ont été représentés sur la Fig.1, dans une position appelée ci-après position optimale et correspondant à la position dans laquelle la vitre 6 et le gousset 8 coopèrent exactement avec le dormant de porte du véhicule et les étanchéités périphériques.

Le gabarit 5 comporte des barres de fixation 12, 14, 16 portées par un cadre 10 plan, tubulaire, parallélépipédique. Ces barres sont appareillées aux gonds et à la serrure de la porte 2 pour fixer le gabarit 5 à la porte 2 dans une position prédéterminée.

Le gabarit 5 comprend en outre trois montants 18, 20 et 22 qui s'étendent dans un plan X, Z au-delà du caisson de la porte 2, parallèlement au plan principal de la vitre 6 et du gousset 8.

En particulier, les montants 18 et 20 s'étendent jusqu'à deux points définissant matériellement la position que les coins 24, 26 de la vitre 6 doivent occuper pour que la vitre 6 soit placée dans sa position optimale.

De même, la hauteur et le positionnement du montant 22 définissent matériellement selon les axes X et Z, la position que le coin 28 du gousset 8 doit occuper pour que le gousset 8 soit placé dans sa position optimale.

Dans l'exemple de réalisation de l'invention décrit, le dispositif d'assistance 4 comprend trois plaques de repère 29A, 29B, 29C et trois lecteurs optiques 30, 32, 34 raccordés chacun à un unique boîtier 35 de commande et de présentation d'informations à l'opérateur de montage des vitres.

Une plaque de repère 29A, 29B, 29C et un lecteur optique 30, 32, 34 sont fixés dans une partie fixe à l'extrémité de chaque montant 18, 20, 22 du gabarit 5 pour lire la position des tranches des coins 24, 26 et 28 de la vitre 6 et du gousset 8.

Comme les trois plaques de repère 29A, 29B, 29C et les lecteurs 30, 32 et 34 sont identiques entre eux et pour faciliter la compréhension de l'invention, seules les fonctions liées à la plaque 29A et au lecteur 30 sont décrites de façon détaillée.

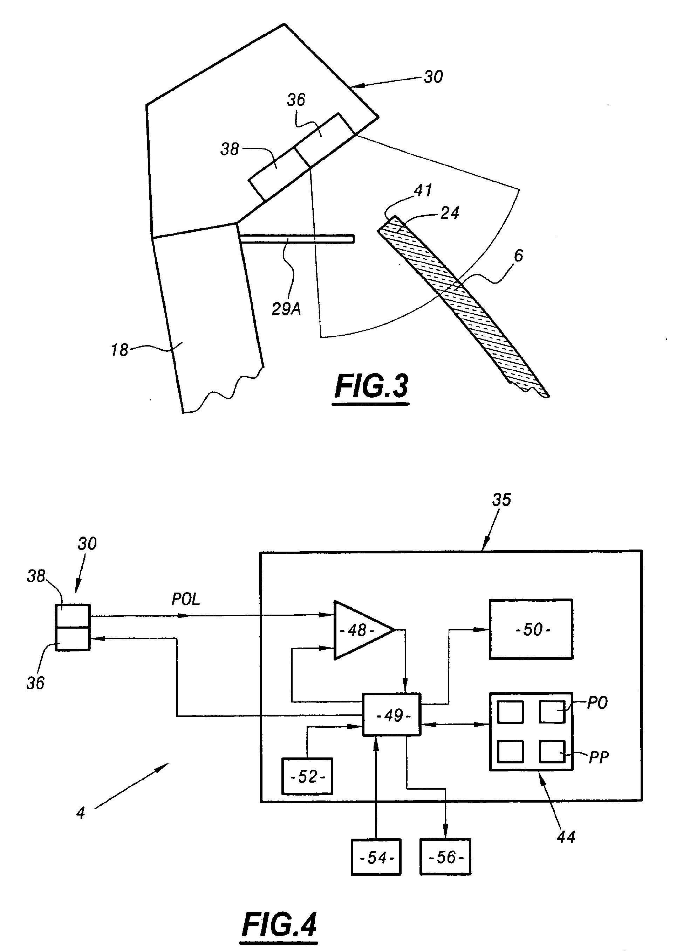

Comme visible sur la figure 3, la plaque de repère 29A est constituée par une plaque réfléchissante montée de façon fixe sensiblement au droit du lecteur 30. La position de la vitre en Y et en Z est ajustée par rapport au gabarit 5 et en particulier par rapport à la plaque 29A solidaire du gabarit. Cette plaque de repère 29A se situe à une coordonnée Y, Z connue par rapport à la position théorique optimale de la vitre dans la zone à régler.

Le lecteur optique 30 comprend un émetteur 36 et au moins un récepteur 38.

L'émetteur 36 est apte à générer un faisceau laser apte à être réfléchi par une surface de référence 41 de la vitre 6.

Cette surface de référence 41 est constituée par la tranche du verre du coin 24 de la vitre 6, appelée ci-après coin 24 pour simplifier la description.

En variante, la surface de référence 41 est constituée par un rebord périphérique supérieur ou un rebord transversal de la vitre.

Le récepteur 38 est propre à réceptionner le faisceau laser réfléchi par la surface de la vitre 6 et à générer une information POL représentative de la position réelle de la vitre. Cette information POL est représentative d'une position relative par rapport à la position de la plaque de repère 29A. Lorsque la vitre 6 est sensiblement dans sa position optimale, le faisceau est réfléchi par la surface de repère 41 de la vitre et l'information POL est sensiblement identique à une information PO représentative de la position optimale du coin 24 de la vitre.

Le boîtier 35 de commande et de présentation d'informations, représenté schématiquement sur la Fig.4, comprend une mémoire 44 et des moyens de comparaison 48.

La mémoire 44 est adaptée pour stocker des informations PO représentatives de la position optimale des coins 24 et 26 de la vitre 6 et du coin 28 du gousset 8 définies relativement à la plaque de repère 29A.

Les informations de position optimale PO définissent des coordonnées selon les axes Y et Z par rapport aux plaques de repère 29A, 29B, 29C, c'est-à-dire des positions relatives optimales recherchées pour les coins 24, 26 et 28 de la vitre 6 et du gousset 8.

Ces informations comprennent des informations de position optimale PO correspondant à une forme théorique du dormant de porte du véhicule et des informations de position optimale PP correspondant à des formes particulières du dormant de porte du véhicule. Ces formes particulières sont par exemple liées à des dérives de fabrication du véhicule.

Les moyens de comparaison 48 sont propres à comparer l'information POL de position réelle des coins 24 et 26 de la vitre 6 délivrée par le récepteur 38 à l'information PO de position optimale des coins 24 et 26 de la vitre 6 enregistrée dans la mémoire 44.

Le boîtier 35 comprend en outre un calculateur 49 raccordé à un dispositif d'affichage 50 de type écran LCD et à une interface homme/machine 52.

Le calculateur 49, connecté aux moyens de comparaison 48, est apte à interpréter le résultat de la comparaison effectuée par les moyens 48 et à transmettre au dispositif d'affichage 50 un ordre de déplacement de la vitre selon les axes Y et Z ou un ordre de positionnement correct de la vitre 6.

Le calculateur 49, connecté aux lecteurs 30, 32 et 34, est adapté pour déclencher l'émission d'un faisceau laser par l'émetteur 36, lorsque l'opérateur le demande par l'intermédiaire de l'interface homme-machine 52.

Le calculateur 49 est raccordé à la mémoire 44 et à un dispositif 54 de lecture de la géométrie de la caisse du véhicule extérieur au boîtier 35.

Le dispositif 54 de lecture est un dispositif comme connu en soi pour déterminer les dispersions de géométrie des caisses de véhicules.

Le calculateur 49 est propre à sélectionner une information PP parmi les informations PO, PP de position optimale stockées dans la mémoire 44 en fonction d'une consigne définissant la forme du pourtour d'entrée de porte du véhicule, transmise par le dispositif de lecture 54.

Le calculateur 49 est également raccordé à un dispositif 56 d'entraînement de la chaîne de montage de la porte pour lui envoyer un signal d'avertissement lorsque la vitre 6 et le gousset 8 sont correctement positionnés. Sur réception de ce signal, le dispositif 56 est apte à débloquer la chaîne de montage de la porte pour fixation d'une nouvelle vitre 6 sur une autre porte 4.

Le procédé d'assistance pour la fixation d'un élément de vitrage sur une porte sans cadre, comprend une étape 100 de montage du gabarit 5 sur la porte 2, à l'aide des barres de fixation 12, 14 et 16.

Au cours d'une étape 102, l'opérateur place la vitre 6 en position haute sur les butées de fin de course du lève-vitre 9.

Au cours d'une étape 104, l'opérateur commande une opération de lecture de la position de la vitre, par l'intermédiaire de l'interface homme/machine 52.

Chaque émetteur 36 des lecteurs optiques 30 et 32 émet un faisceau laser en direction de la vitre 6. Chaque faisceau est réfléchi par une surface de la vitre et est réceptionné par un récepteur 38 des lecteurs 30 et 32. Chaque récepteur 38 délivre aux moyens de comparaison 48 du boîtier 35, un signal représentatif d'une information POL de position réelle de la vitre 6.

Au cours d'une étape 106, le calculateur 49 recherche dans la mémoire 44, des informations de position optimale PO de la vitre 6 en fonction de la consigne préalablement transmise par le dispositif de lecture 54. Le calculateur 49 transmet les informations de position optimale PO aux moyens de comparaison 48.

Au cours d'une étape 108, les moyens de comparaison 48 comparent les informations PO reçues du calculateur 49 et les informations POL reçues du récepteur 38 et délivrent au calculateur 49, le résultat de cette comparaison. Le calculateur 49 interprète ce résultat.

Cette interprétation consiste à calculer la distance séparant les coins 24, 26 de la vitre dans sa position réelle de ces coins lorsque la vitre est dans la position optimale.

Cette distance est définie par une longueur selon chaque axe Y, Z. Elle est calculée à partir des coordonnées PO de chaque coin 24, 26 et des coordonnées POL de chaque coin 24, 26.

Lorsque la longueur selon l'un des axes Y, Z est supérieure à une valeur de tolérance prédéfinie, il transmet au dispositif d'affichage 50 un ordre de déplacement de la vitre 6 selon cet axe, selon une direction et une longueur correspondant à la longueur calculée et permettant de corriger la position de la vitre 6, pour obtenir la position optimale de celle-ci.

Au cours d'une étape 110, le dispositif d'affichage 50 affiche les ordres de déplacement selon les axes Y et Z.

Au cours d'une étape 112, l'opérateur corrige la position de la vitre 6 par déplacement de celle-ci ou déplacement des butées de fin de course et active les lecteurs optiques 30 et 32 par l'intermédiaire de l'interface 52, pour réaliser une nouvelle détermination de la position de la vitre 6, au cours d'une étape 104.

Les étapes 104, 108, 110 et 112 sont répétées jusqu'à ce que la vitre 6 soit dans une position acceptable déterminée par les tolérances prédéfinies.

Lorsque la vitre est dans une position acceptable, le dispositif d'affichage 50 affiche un résultat correspondant, au cours d'une étape 114.

Au cours d'une étape 116, l'opérateur fixe la vitre 6 au lève-vitre 9 et les étapes 102 à 116 sont répétées pour la fixation du gousset 8 à la porte 2.

Lorsque le gousset 8 est correctement fixé, le calculateur 49 transmet un signal d'avertissement au dispositif 56 pour que celui-ci débloque la ligne de montage de la porte 2.

Au cours d'une étape 118, le dispositif 56 débloque la ligne de montage de la porte.

En variante, le récepteur 38 des lecteurs optiques 30, 32, 34 comprend plusieurs surfaces de réception du faisceau laser entourant l'émetteur 36 pour faciliter la lecture de la positon de la vitre 6.

En variante, les lecteurs optiques 30, 32 et 34 sont remplacés par des caméras. La mémoire 44 comporte des modèles optimaux de contour des vitres. Dans ce cas, le calculateur 48 comprend des moyens de traitement d'images propres à définir le contour des vitres filmées par les caméras et les moyens de comparaison 48 sont propres à comparer le contour des vitres aux modèles optimaux de contour.

En variante, la mémoire 44 comprend pour chaque zone de référence 40, deux informations de position optimale correspondant à deux positions limites acceptables PL1 et PL2 définissant entre elles une tolérance de positionnement de la vitre 6. Dans ce cas, le calculateur 49 détermine si la position réelle de la vitre 6 est comprise entre ces deux positions limites.

En variante, le dispositif d'assistance 4 selon l'invention peut également être utilisé pour fixer des glissières ou des montants à la porte 2.

En variante, la position de l'élément de vitrage selon l'axe X est également ajustée à l'aide du dispositif et du procédé selon l'invention.

L'invention concerne également un dispositif d'assistance à la fixation d'une vitre latérale arrière mobile (coupé sans pied milieu, coupé cabriolet...), en vue de la monter sur la caisse.

L'invention s'applique également à la fixation d'une custode mobile sur des chariots d'un lève-vitre.

## Revendications

1. Dispositif (4) d'assistance à la fixation d'au moins un élément de vitrage (6, 8) sur une porte (2) sans cadre d'un véhicule automobile comportant un gabarit (5) destiné à être monté sur la porte (2) dans une position prédéterminée, et comportant des moyens (29A, 29B, 29C, 30, 32, 34, 48, 50) de fixation de la position optimale de ou de chaque élément de vitrage (6, 8), lesdits moyens (29A, 29B, 29C, 30, 32, 34, 48, 50) de fixation de la position optimale comprennent :
- au moins un lecteur (30, 32, 34) fixé sur le gabarit (5) pour lire la position réelle de l'élément de vitrage (6, 8) et à générer au moins une information (POL) représentative de cette position réelle par rapport au gabarit ;
- une mémoire de stockage (44) d'au moins une information (PO, PP) représentative de la position optimale de l'élément de vitrage (6, 8) par rapport au gabarit (5) ;
- des moyens de comparaison (48) de la ou de chaque information (POL) représentative de la position réelle à la ou à chaque information (PO, PP) représentative de la position optimale ; et
- des moyens de mise à disposition (50) du résultat de cette comparaison ;
**caractérisé en ce que** les moyens (29A, 29B, 29C, 30, 32, 34, 48, 50) de fixation de la position optimale comprennent au moins une plaque de repère (29A, 29B, 29C) fixée au gabarit (5) sensiblement au droit de ou de chaque lecteur (30, 32, 34) et formant un repère pour la lecture de la position d'une surface de référence (41) de l'élément de vitrage (6, 8), le ou chaque lecteur (30, 32, 34) étant un lecteur optique propre à lire la position de cette surface de référence (41), et **en ce que** la ou chaque information (PO, PP) représentative de la position optimale de l'élément de vitrage (6, 8) comprend au moins une information représentative de cette surface de référence (41).

2. Dispositif selon la revendication 1, **caractérisé en ce que** le ou chaque lecteur optique (30, 32, 34) comprend au moins un émetteur (36) apte à générer un faisceau laser et au moins un récepteur (38) apte à réceptionner au moins une partie dudit faisceau laser émis, après réflexion de celui-ci contre une surface de l'élément de vitrage (6, 8).

3. Dispositif selon la revendication 1, **caractérisé en ce que** la surface de référence (41) comporte un bord périphérique, une tranche ou un coin (24, 26, 28) de l'élément de vitrage (6, 8).

4. Dispositif selon l'une quelconque des revendications précédentes, **caractérisé en ce que** la ou chaque information (PO, PP) représentative de la position optimale comprend au moins deux informations (PL1, PL2) chacune représentative d'une position limite acceptable de l'élément de vitrage (6, 8), et **en ce que** les moyens de comparaison (48) sont propres à comparer la ou chaque information (POL) représentative de la position réelle à chaque information (PL1, PL2) représentative d'une position limite acceptable de l'élément de vitrage (6,8).

5. Dispositif selon l'une quelconque des revendications précédentes, **caractérisé en ce qu'**il comprend un calculateur (49) propre à définir au moins une demande de déplacement de l'élément de vitrage (6, 8) selon l'un au l'autre des axes (Y, Z), en fonction du résultat de la comparaison, et **en ce que** les moyens d'affichage (50) sont propres à afficher la ou chaque demande de déplacement.

6. Dispositif selon la revendication 5, **caractérisé en ce que** la mémoire (44) est propre à stocker plusieurs informations (PO, PP) de position optimale de l'élément de vitrage (6, 8) correspondant chacune à différents pourtours d'entrée de porte (2), et **en ce que** ledit calculateur (49) est apte à recevoir au moins une information relative au pourtour du cadre de la porte (2) et à sélectionner dans la mémoire (44) une information (PO, PP) représentative de la position optimale de l'élément de vitrage (6, 8) en fonction de la ou de chaque information relative au pourtour du cadre de la porte.

7. Dispositif selon l'une quelconque des revendications 5 et 6, **caractérisé en ce que** ledit calculateur (49) est apte à transmettre un signal à un dispositif d'entraînement (56) de la chaîne de montage de portes, lorsque le ou chaque élément de vitrage (6, 8) est correctement positionné.

8. Procédé de fixation d'au moins un élément de vitrage (6, 8) sur une porte (2) sans cadre d'un véhicule automobile, le procédé comportant les étapes suivantes :
- montage (100) d'un gabarit (5) sur la porte (2), par un opérateur, ledit gabarit délimitant matériellement la position optimale de ou de chaque élément de vitrage (6, 8) ;
- ajustement (102) manuel, assisté ou automatisé de la position de l'élément de vitrage (6, 8) sur la porte (2) ;
- fixation de la position de ou de chaque élément de vitrage (6, 8) à la porte (2) ;ladite étape de fixation comprenant les étapes suivantes :
- lecture (104) de la position réelle par rapport au gabarit de ou de chaque élément de vitrage (6, 8) par au moins un lecteur (30, 32, 34) fixé sur ledit gabarit (5) et délivrance d'au moins une information (POL) représentative de la position réelle par rapport au gabarit de ou de chaque élément de vitrage (6, 8), à des moyens de comparaison (48) ;
- comparaison (108) de la ou de chaque information (POL) représentative de la position réelle par rapport au gabarit à au moins une information (PO, PP) préenregistrée représentative d'une position optimale par rapport au gabarit de ou de chaque élément de vitrage (6, 8), par les moyens de comparaison (48);
- interprétation (108) du résultat de cette comparaison, par un calculateur (49) ; et
- mise à disposition (110, 114) de l'interprétation du résultat de cette comparaison sur un dispositif d'affichage (50);
**caractérisé en ce que** l'étape de lecture (104) comprend en outre une étape de lecture de la position d'une surface de référence (41) de l'élément de vitrage (6, 8) par le ou chaque lecteur (30, 32, 34), au moins une plaque de repère (29A, 29B, 29C) étant fixée au gabarit (5) sensiblement au droit de ou de chaque lecteur (30, 32, 34) et formant un repère pour ladite lecture, et **en ce que** la ou chaque information (PO, PP) représentative de la position optimale de l'élément de vitrage (6, 8) comprend au moins une information représentative de cette surface de référence (41).

## Claims

1. Device (4) for assisting the mounting of at least one glazing element (6, 8) on a frameless door (2) of a motor vehicle, comprising a template (5) to be mounted on the door (2) in a predetermined position, and comprising means (29A, 29B, 29C, 30, 32, 34, 48, 50) for determining the optimal position of a or each glazing element (6, 8), which means (29A, 29B, 29C, 30, 32, 34, 48, 50) for determining the optimal position comprise:
- at least one reader (30, 32, 34) mounted on the template (5) for reading the actual position of the glazing element (6, 8) and for generating at least one datum (POL) representing that actual position relative to the template;
- a memory (44) for storing at least one datum (PO, PP) representing the optimal position of the glazing element (6, 8) relative to the template (5);
- means for comparing (48) the or each datum (POL) representing the actual position with the or each datum (PO, PP) representing the optimal position; and
- means for making available (50) the result of that comparison;
**characterized in that** the means (29A, 29B, 29C, 30, 32, 34, 48, 50) for determining the optimal position comprise at least one marker plate (29A, 29B, 29C) mounted on the template (5) approximately level with the or each reader (30, 32, 34) and constituting a marker for use in reading the position of a reference surface (41) of the glazing element (6, 8), the or each reader (30, 32, 34) being an optical reader suitable for reading the position of that reference surface (41), and **in that** the or each datum (PO, PP) representing the optimal position of the glazing element (6, 8) comprises at least one datum representing that reference surface (41).

2. Device according to claim 1, **characterized in that** the or each optical reader (30, 32, 34) comprises at least one transmitter (36) capable of generating a laser beam and at least one receiver (38) capable of receiving at least a portion of said emitted laser beam after reflection of the laser beam against a surface of the glazing element (6, 8).

3. Device according to claim 1, **characterized in that** the reference surface (41) includes a peripheral rim, an edge or a corner (24, 26, 28) of the glazing element (6, 8).

4. Device according to any one of the preceding claims, **characterized in that** the or each datum (PO, PP) representing the optimal position comprises at least two data (PL1, PL2), each representing an acceptable limit position of the glazing element (6, 8) and **in that** the comparison means (48) are suitable for comparing the or each datum (POL) representing the actual position with each datum (PL1, PL2) representing an acceptable limit position of the glazing element (6, 8).

5. Device according to any one of the preceding claims, **characterized in that** it comprises calculating means (49) suitable for defining at least one request for movement of the glazing element (6, 8) along one or other of the axes (Y, Z) in dependence upon the result of the comparison, and **in that** the display means (50) are suitable for displaying the or each request for movement.

6. Device according to claim 5, **characterized in that** the memory (44) is suitable for storing a plurality of data (PO, PP) relating to the optimal position of the glazing element (6, 8), each corresponding to different entry outlines of the door (2), and **in that** said calculating means (49) are capable of receiving at least one datum relating to the outline of the frame of the door (2) and of selecting from the memory (44) a datum (PO, PP) representing the optimal position of the glazing element (6, 8) in dependence upon the or each datum relating to the outline of the door frame.

7. Device according to either claim 5 or claim 6, **characterized in that** said calculating means (49) are capable of transmitting a signal to a device (56) for actuating the door assembly line when the or each glazing element (6, 8) is positioned correctly.

8. Method for mounting at least one glazing element (6, 8) on a frameless door (2) of a motor vehicle, the method comprising the following steps:
- mounting (100) a template (5) on a door (2), by an operator, said template physically delimiting the optimal position of the or each glazing element (6, 8);
- manual, assisted or automated adjusting (102) of the position of the glazing element (6, 8) on the door (2);
- determining the position of the or each glazing element (6, 8) on the door (2), said determining step comprising the following steps:
- reading (104) the actual position relative to the template of the or each glazing element (6,8) by at least one reader (30, 32, 34) mounted on said template (5) and delivering at least one datum (POL) representing the actual position relative to the template of the or each glazing element (6, 8) to comparison means (48);
- comparing (108) by comparison means (48) the or each datum (POL) representing the actual position relative to the template with at least one prerecorded datum (PO, PP) representing an optimal position relative to the template of the or each glazing element (6, 8);
- interpreting (108) the result of that comparison by calculating means (49); and
- making available (110, 114) the interpretation of the result of that comparison on a display device (50);
**characterized in that** the reading step (104) additionally comprises a step of reading the position of a reference surface (41) of the glazing element (6, 8) by the or each reader (30, 32, 34), at least one marker plate (29A, 29B, 29C) being mounted on the template (5) approximately level with the or each reader (30, 32, 34) and constituting a marker for that reading, and **in that** the or each datum (PO, PP) representing the optimal position of the glazing element (6, 8) comprises at least one datum representing that reference surface (41).

## Patentansprüche

1. Vorrichtung (4) zur Unterstützung bei der Befestigung wenigstens eines Verglasungselements (6, 8) an einer rahmenlosen Tür (2) eines Kraftfahrzeugs, mit einer Schablone (5), die dazu vorgesehen ist, an der Tür (2) in einer vorgegebenen Position angebracht zu werden, und mit Mitteln (29A, 29B, 29C, 30, 32, 34, 48, 50) zum Fixieren der optimalen Position des oder jedes Verglasungselements (6, 8), wobei die Mittel (29A, 29B, 29C, 30, 32, 34, 48, 50) zum Fixieren der optimalen Position umfassen:
- wenigstens einen Leser (30, 32, 34), der an der Schablone (5) befestigt ist, um die wirkliche Position des Verglasungselements (6, 8) zu lesen und um wenigstens eine Informationen (POL) zu erzeugen, die diese wirkliche Position in Bezug auf die Schablone repräsentiert;
- einen Speicher (44) zum Speichern wenigstens einer Information (PO, PP), die die optimale Position des Verglasungselements (6, 8) in Bezug auf die Schablone (5) repräsentiert;
- Mittel (48) zum Vergleichen der oder jeder Information (POL), die die wirkliche Position repräsentiert, mit der oder jeder Information (PO, PP), die die optimale Position repräsentiert; und
- Mittel (50), um das Ergebnis dieses Vergleichs zur Verfügung zu stellen;
**dadurch gekennzeichnet, dass** die Mittel (29A, 29B, 29C, 30, 32, 34, 48, 50) zum Fixieren der optimalen Position wenigstens eine Markierungsplatte (29A, 29B, 29C) umfassen, die an der Schablone (5) im Wesentlichen am Ort des oder jedes Lesers (30, 32, 34) befestigt ist und eine Markierung zum Lesen der Position einer Referenzoberfläche (41) des Verglasungselements (6, 8) bildet, wobei der oder jeder Leser (30, 32, 34) ein optischer Leser ist, der die Position dieser Referenzoberfläche (41) lesen kann, und dass die oder jede Information (PO, PP), die die optimale Position des Verglasungselements (6, 8) repräsentiert, wenigstens eine Information enthält, die diese Referenzoberfläche (41) repräsentiert.

2. Vorrichtung nach Anspruch 1, **dadurch gekennzeichnet, dass** der oder jeder optische Leser (30, 32, 34) wenigstens einen Sender (36), der ein Laserstrahlenbündel erzeugen kann, und wenigstens einen Empfänger (38), der wenigstens einen Teil des gesendeten Laserstrahlenbündels nach dessen Reflexion an einer Oberfläche des Verglasungselements (6, 8) empfangen kann, umfasst.

3. Vorrichtung nach Anspruch 1, **dadurch gekennzeichnet, dass** die Referenzoberfläche (41) einen Umfangsrand, eine Schmalseite oder eine Ecke (24, 26, 28) des Verglasungselements (6, 8) enthält.

4. Vorrichtung nach einem der vorhergehenden Ansprüche, **dadurch gekennzeichnet, dass** die oder jede Information (PO, PP), die die optimale Position repräsentiert, wenigstens zwei Informationen (PL1, PL2) umfasst, wovon jede eine annehmbare Grenzposition des Verglasungselements (6, 8) repräsentiert, und dass die Vergleichsmittel (48) die oder jede Information (POL), die die wirkliche Position repräsentiert, mit jeder Information (PL1, PL2), die eine annehmbare Grenzposition des Verglasungselements (6, 8) repräsentiert, vergleichen können.

5. Vorrichtung nach einem der vorhergehenden Ansprüche, **dadurch gekennzeichnet, dass** sie einen Rechner (49) umfasst, der wenigstens eine Anforderung zum Verlagern des Verglasungselements (6, 8) längs der einen oder der anderen der Achsen (Y, Z) in Abhängigkeit von dem Vergleichsergebnis definieren kann, und dass die Anzeigemittel (50) die oder jede Verlagerungsanforderung anzeigen können.

6. Vorrichtung nach Anspruch 5, **dadurch gekennzeichnet, dass** der Speicher (44) mehrere Informationen (PO, PP) der optimalen Position des Verglasungselements (6, 8), die jeder von verschiedenen Eintrittsumgebungen der Tür (2) entsprechen, speichern kann und dass der Rechner (49) wenigstens eine Information bezüglich der Umgebung des Rahmens der Tür (2) empfangen kann und in dem Speicher (44) eine Information (PO, PP), die die optimale Position des Verglasungselements (6, 8) repräsentiert, als Funktion der oder jeder Information bezüglich der Umgebung des Rahmens der Tür auswählen kann.

7. Vorrichtung nach einem der Ansprüche 5 und 6, **dadurch gekennzeichnet, dass** der Rechner (49) ein Signal an eine Vorrichtung (56) zum Antreiben des Türmontagebandes senden kann, wenn das oder jedes Verglasungselement (6, 8) korrekt positioniert ist.

8. Verfahren zum Fixieren wenigstens eines Verglasungselements (6, 8) an einer rahmenlosen Tür (2) eines Kraftfahrzeugs, wobei das Verfahren die folgenden Schritte umfasst:
- Anbringen (100) einer Schablone (5) an der Tür (2) durch eine Bedienungsperson, wobei die Schablone die optimale Position des oder jedes Verglasungselements (6, 8) körperlich begrenzt;
- manuelles, unterstütztes oder automatisches Einstellen (102) der Position des Verglasungselements (6, 8) an der Tür (2); und
- Fixieren der Position des oder jedes Verglasungselements (6, 8) an der Tür (2), wobei der Fixierungsschritt die folgenden Schritte umfasst:
- Lesen (104) der wirklichen Position in Bezug auf die Schablone des oder jedes Verglasungselements (6, 8) durch wenigstens einen an der Schablone (5) befestigten Leser (30, 32, 34) und Liefern wenigstens einer Information (POL), die die wirkliche Position in Bezug auf die Schablone des oder jedes Verglasungselements (6, 8) repräsentiert, an Vergleichsmittel (48);
- Vergleichen (108) der oder jeder Information (POL), die die wirkliche Position in Bezug auf die Schablone repräsentiert, mit wenigstens einer im Voraus eingetragenen Information (PO, PP), die eine optimale Position in Bezug auf die Schablone des oder jedes Verglasungselements (6, 8) repräsentiert, durch die Vergleichsmittel (48);
- Interpretieren (108) des Ergebnisses dieses Vergleichs durch einen Rechner (49); und
- Verfügbarmachen (110, 114) der Interpretation des Ergebnisses dieses Vergleichs auf einer Anzeigevorrichtung (50);
**dadurch gekennzeichnet, dass** der Leseschritt (104) außerdem einen Schritt des Lesens der Position einer Referenzoberfläche (41) des Verglasungselements (6, 8) durch den oder jeden Leser (30, 32, 34) umfasst, wobei wenigstens eine Markierungsplatte (29A, 29B, 29C) an der Schablone (5) im Wesentlichen am Ort des oder jedes Lesers (30, 32, 34) befestigt ist und eine Markierung für den Leser bildet, und dass die oder jede Information (PO, PP), die die optimale Position des Verglasungselements (6, 8) repräsentiert, wenigstcns eine Information enthält, die diese Referenzoberfläche (41) repräsentiert.
